# EUROPEAN PATENT APPLICATION

(11) **EP 1 014 711 A1**
(43) Date of publication of application: **28.06.2000**
(21) Application number: 99922566.7
(22) Date of filing: 28.05.1999
(51) Int. Cl.: H04N 5/44, H04N 7/08

(54) **INFORMATION PROCESSING APPARATUS AND METHOD, AND PROVIDING MEDIUM**

(30) Priority: 29.05.1998 JP 14953998
(71) Applicant: Sony Corporation, Tokyo 141-0001 (JP)
(72) Inventor: KAWAMURA, Harumi, Shinagawa-ku Tokyo 141-0001 (JP); HORIGUCHI, Mari, Shingawa-ku Tokyo 141-0001 (JP)
(74) Representative: Harris, Ian Richard
(86) International application number: JP9902853
(87) International publication number: WO9963752

(57) **Abstract**

When a tuner (2) receives EPG service information and EPG program information transmitted together with broadcasting data, a making unit (12) in the tuner (2) makes an EPG service list about receivable channels from the EPG service information by using a descriptor conforming to a general-purpose format, such as the AV/C protocol. A changing unit (13) in the tuner (2) converts the EPG program information into an EPG event list by using a descriptor conforming to a general-purpose format, such as the AV/C protocol. Therefore, the EPG service list and EPG event list can be read from any device under the control according to the protocols of the general-purpose formats used, and the EPG data can be easily handled by any other device other than the tuner.

## Description

### TECHNICAL FIELD

The present invention relates to an information processing system, an information processing method and a provision medium and more particularly to those capable of accessing an electric program guide (Electric Program Guide; hereinafter referred to as EPG) information easily.

### BACKGROUND ART

Recently, such a system has been proposed that a tuner for receiving a digital satellite broadcasting, a VCR (video cassette recorder) for recording a received program and a controller for controlling these elements are connected via IEEE1394 bus so as to transmit and receive data therebetween.

As information transmitted from the digital satellite broadcasting, for example, there is EPG information. The EPG an electronified TV guide convenient for reservation of TV program by user. Data transmitted as the EPG information includes station name, program name, start time, end time and the like.

However, there is a problem that the aforementioned EPG data structure depends on system of EPG transmitting side and does not always coincide with application of a reception side.

If a program of an interest is found in the EPG, station selection procedure is carried out. However, because information for station selection (service information) is sent separately, it takes long to search for station selection information.

### DISCLOSURE OF THE INVENTION

The present invention has been accomplished in view of these problems, and therefore an object of the invention is to convert received EPG data to a predetermined format of an application of a reception side by rearranging that data to a list structure.

Another object of the invention is to provide a data structure capable of linking with service information necessary for station selection as well as to find a program to be reserved, thereby making it possible to select station from a reservation screen immediately.

According to a first invention, there is provided an information processing system comprising: extracting means for extracting program guide information included in broadcasting signal; and converting means for converting program guide information extracted by the extracting means to a data structure which can be shared by appliances connected to a predetermined network. As a result, program guide information included in broadcasting signal can be shared by this system and appliances connected thereto via a predetermined network so that appliances other than the appliance for receiving broadcasting signal are capable of using the program guide information easily.

According to a second invention, in an information processing system according to the first invention, a data structure to be converted by the convening means is of a general purpose format using a predetermined descriptor and program guide information convened to data structure of the general purpose format is capable of being transmitted to the network based on a command specified by the general purpose format. As a result, the program guide information can be expressed with general format data using a predetermined descriptor, so that any appliance corresponding to the appropriate general purpose format is capable of reading the program guide information if it is connected to the network.

According to a third invention, in an information processing system according to the first invention, said system further comprises storage means for storing program guide information convened by the converting means. As a result, a processing for other appliance to read out the program guide information stored in the storage means or the like can be carried out using storage data of the storage means easily.

According to a fourth invention, in an information processing system according to the third invention, the storage means includes a storage area capable of storing information inputted by user about each program or each channel indicated by the stored program guide information. As a result, when the program guide information is displayed, a comment, name or the like inputted by user can be indicated at the same time, so that an information processing system easy to use is obtained.

According to a fifth invention, there is provided an information processing system comprising: extracting means for extracting service information included in broadcasting signal; and creation means for obtaining a list of service information relating to a channel which can be received from the service information extracted by the extracting means. As a result, only service information about a channel which can be received is selected from the service information included in broadcasting signal, so that only information necessary for user is listed.

According to a sixth invention, in an information processing system according to the fifth invention, the channel which can be received is a channel capable of cancelling scrambling applied on broadcasting signal and a channel whose broadcasting signal is not scrambled. As a result, information about a channel which can be received according to contract on reception via this system is selected.

According to a seventh invention, an information processing system according to the fifth invention, the extracting means extracts also program guide information and has a converting means for converting the extracted program guide information to a data structure of a predetermined format of each channel indicated by a list created by the creation means. As a result, program guide information about a selected channel is converted to a data structure of a predetermined format of each channel so that the program guide information of each channel can be stored as data easy to use.

According to an eighth invention, in an information processing system according to the seventh invention, a format with a data structure to be converted by the converting means is a general purpose format using a predetermined descriptor and program guide information converted to data structure of the general purpose format is capable of being transmitted to a predetermined network based on a command specified by the general purpose format. As a result, the program guide information of a channel which can be received is expressed with data of general purpose format using a predetermined descriptor. Any appliance coinciding with the appropriate general purpose format is capable of reading guide information about a program which can be actually received.

According to a ninth invention, in an information processing system according to the seventh invention, data converted by the converting means is capable of being supplied with information inputted by user for each program or each channel indicated by program guide information of the data. As a result, when the program guide information of a channel which can be received is displayed, a comment, name or the like inputted by user can be indicated at the same time, so that an information processing system easy to use is obtained.

According to a tenth invention, there is provided an information processing method comprising: extracting program guide information included in broadcasting signal; and converting the extracted program guide information to a data structure capable of being shared among appliances connected via a predetermined network. As a result, program guide information included in broadcasting signal can be shared by a plurality of appliances connected thereto via a predetermined network so that appliances other than an appliance for receiving broadcasting signal are capable of using the program guide information easily.

According to an eleventh invention, in an information processing method according to the tenth invention, the data structure to be converted is a general purpose format using a predetermined descriptor and program guide information converted to data structure of the general purpose format is transmitted to the network based on a command specified by the general purpose format. As a result, the program guide information is expressed with general format data using a predetermined descriptor, so that any appliance corresponding to the appropriate general purpose format is capable of reading the program guide information.

According to a twelfth invention, in an information processing method according to the tenth invention, the program guide information whose data structure is converted is added by information inputted by user for each program or each channel indicated by the program guide information. As a result, when the program guide information is displayed, a comment, name or the like inputted by user can be indicated at the same time, so that an information processing system easy to use is obtained.

According to a thirteenth invention, there is provided an information processing method comprising: extracting service information included in broadcasting signal; and creating a list of information about a channel which can be received from the extracted service information. As a result, only service information about a channel which can be received is selected from the service information included in broadcasting signal, so that only information necessary for user is listed.

According to a fourteenth invention, in an information processing method according to the thirteenth invention, the channel which can be received is a channel capable of cancelling scrambling applied on broadcasting signal and a channel whose broadcasting signal is not scrambled. As a result, information about a channel which can be received is selected appropriately based on a contract on reception.

According to a fifteenth invention, in an information processing method according to the thirteenth invention, said method further comprises: extracting program guide information; and converting the extracted program guide information to a data structure of a predetermined format for each channel indicated by the list. As a result, program guide information about a selected channel is converted to a data structure of a predetermined format of each channel so that the program guide information of each channel can be stored as data easy to use.

According to a sixteenth invention, in an information processing method according to the fifteenth invention, the predetermined format is a general purpose format using a predetermined descriptor and program guide information converted to data structure of the general purpose format is transmitted to a predetermined network based on a command specified by the general purpose format. As a result, the program guide information of the channel which can be received is expressed with general format data using a predetermined descriptor, so that any appliance corresponding to the appropriate general purpose format is capable of reading the guide information about the program which can be received in a practical manner.

According to a seventeenth invention, in an information processing method according to the fifteenth invention, data with the data structure of the predetermined format is added by information inputted by user for each program or each channel indicated by program guide information of the data. As a result, when the program guide information of a channel which can be received is displayed, a comment, name or the like inputted by user can be indicated at the same time, so that an information processing system easy to use is obtained.

According to an eighteenth invention, there is provided a provision medium storing a program data for executing a processing including a step for converting program guide information included in broadcasting signal to a data structure capable of being shared among appliances connected via a predetermined network. As a result, if a program stored in the medium is read out, installed in information processing system and executed, program guide information included in broadcasting signal can be shared by a plurality of appliances connected via a predetermined network, so that appliances other than an appliance receiving broadcasting signal are capable of using program guide information easily.

### BRIEF DESCRIPTION OF DRAWINGS

FIG. 1 is a block diagram showing a structure of an embodiment of an information processing system to which the present invention is applied.
FIG. 2 is a diagram for explaining an outline of service information and EPG information.
FIG. 3 is a diagram for explaining an example of content of the EPG information.
FIG. 4 is a diagram for explaining an outline of EPG service list and EPG event list of the present invention.
FIG. 5 is a diagram for explaining identification of a list.
FIG. 6 is a diagram for explaining identification of an object list.
FIG. 7 is a diagram for explaining a format for the EPG service list descriptor.
FIG. 8 is a diagram for explaining a format of list specific info of FIG. 7.
FIG. 9 is a diagram for explaining into type of FIG. 8.
FIG. 10 is a diagram for explaining a format of object entry of FIG. 7.
FIG. 11 is a diagram for explaining a format of entry specific information of FIG. 10.
FIG. 12 is a diagram for explaining a format of EPG event list descriptor.
FIG. 13 is a diagram for explaining a format of object entry of FIG. 12.
FIG. 14 is a diagram for explaining a format of entry specific information of FIG. 13.
FIG. 15 is a diagram for explaining info type of FIG. 14.
FIG. 16 is a diagram for explaining a format of entry specific information in case where info type of FIG. 14 is event.

### BEST MODE FOR CARRYING OUT THE INVENTION

Hereinafter, the embodiment of the present invention will be described.

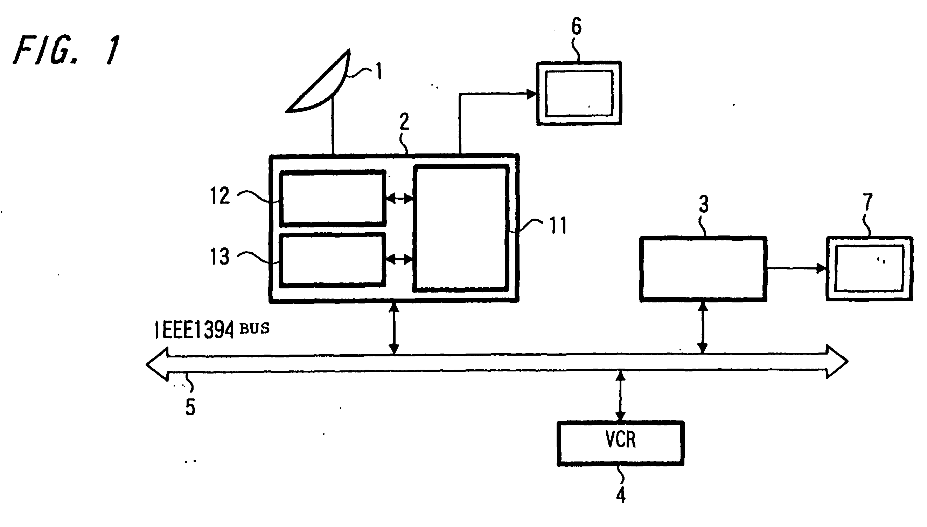

FIG. 1 is a block diagram showing a structure of an embodiment of an information processing system to which the present invention is applied. According to this embodiment, a tuner 2, a controller 3 and a VCR (video deck) 4 are connected to each other via an IEEE1394 type bus 5. The tuner 2 receives digital broadcasting data transmitted from an artificial satellite via an antenna 1. A TV receiver 6 is connected to the tuner 2 so that TV broadcasting program received by the tuner 2 can be seen through this TV receiver 6. Also, a TV receiver 7 is connected to the controller 3 connected to the bus 5. Video data and audio data are transmitted via the bus 5 and the transmitted data is received by the controller 3. The data is supplied to the TV receiver 7 so that the TV broadcasting program can be seen also via the TV receiver 7.

The tuner 2 is a receiving unit (information processing system) called IRD (integrated receiver decoder) in which receiving function and decoding function are integrated. This tuner 2 is capable of receiving digital broadcasting (TV broadcasting, radio broadcasting, data broadcasting and the like) and decoding the received broadcasting data. This is so constructed as to be capable of cancelling a scrambling if a broadcasting signal of a received channel is scrambled. However, only the scrambling of a channel whose reception is contracted preliminarily to a broadcasting center can be cancelled and the scrambling of a non-contracted channel cannot be cancelled. Data about this reception contract is transmitted to the broadcasting center or the like via a telephone line (not shown) connected to the tuner 2. On the side of the tuner 2, data necessary for cancelling the scrambling is memorized, for example, in an IC card connected to the tuner 2.

Video data received by the tuner 2 or the like is supplied directly to the connected TV receiver 6 and additionally, can be supplied to the VCR 4 through the IEEE1394 bus 5 by the controller 3 or the like so that the data is recorded in a recording medium such as video tape by the VCR 4.

As the controller 3, an information processing system such as a personal computer is used.

In the IEEE1394 type bus to which those electronic appliances are connected, isochrons transmission channel for transmitting large volume data such as video data and audio data at real time and asynchronous transmission channel for transmitting data such as control command securely are prepared. As a result, this bus is capable of transmitting these data mixedly.

Further, these electronic appliances connected to the bus 5 can be controlled by each other according to a general purpose format using a descriptor based on a predetermined standard. That is, they can be controlled by each other according to a command (AV/C Command Transaction Set: hereinafter referred to as AV/C command) specified for transmission on the IEEE1394 type bus. An appliance corresponding to the AV/C command is provided with a descriptor in which a function or the like which can be achieved thereon is described and by using that descriptor, data necessary for controlling from other appliance can be obtained. Details of the IEEE1394 type bus and AV/C command are publicized in http:// www.1394TA.org.

A creation portion 12 provided in the tuner 2 creates EPG service list based on EPG service information of broadcasting data of a received channel by using a descriptor of a protocol specified by the AV/C command and stores it in a memory 11 of the tuner 2. A changing portion 13 provided in the tuner converts the received EPG program information to an EPG event list by using the descriptor of the AV/C protocol and stores it in the memory 11.

Digital broadcasting data of each channel which is transmitted from a satellite and is received by the tuner 2 is data to be transmitted as a transport stream in which a transport packet having a predetermined fixed length is multiplexed. In this case, data to be transmitted as broadcasting data such as video data, audio data, EPG program information, EPG service information and the like is structured basically in the same type transport packet. Then, in the tuner 2, stream type data given to that transport packet is determined so as to identify that data and each data is extracted.

In case of digital satellite broadcasting, broadcasting data of a plurality of channels may be multiplexed in a signal relayed via a transponder. In this case, the EPG program information and EPG service information may be shared by a plurality of channels sharing the transponder.

In the tuner 2, based on the EPG service information extracted from the broadcasting data transmitted in this way, the creation portion 12 creates an EPG service list using a descriptor of a protocol specified by the AV/C command and stores it in the memory 11. Further, the EPG program information extracted from the broadcasting data is converted to the EPG event list using a descriptor of the AV/C protocol by the changing portion 13 and that data is stored in the memory 11.

A detail of the EPG service list to be created based on the EPG service information will be described later. The EPG service information is information relating to a channel to be served in a broadcasting system to be received by this tuner 2 and includes broadcasting frequency of each channel, station name of channel, logo mark and the like.

In this case, the EPG service list which is created by the creation portion 12 and stored in the memory 11 is a list relating to a channel (station) which can be received by the tuner 2. For example, as for channels of pay broadcasting, only channels of which the scrambling can be cancelled by the tuner 2 on reception contract are included in the list and data of channels without reception contracted are excluded from the list. Data about free broadcasting channels whose reception contract is not necessary are all included in the EPG service list to be stored in the memory 11. However, if user operates for selection of channels to be included in the list, it is permissible to include data about a channel whose reception is not contracted or exclude data about unnecessary free channels. Further, data about a pay broadcasting channel whose reception can be contracted by a simple operation, such as a pay per view channel in which accounting is carried out for each program, may be included in the EPG service list to be stored in the memory 11.

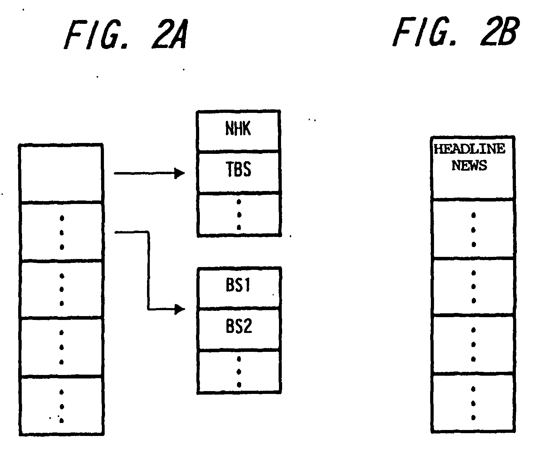

FIG. 2(A) shows service information included in broadcasting data transmitted from a satellite or the like. Service information is comprised of frequency, station name and the like necessary for selecting each station (channel). Usually, if the service information is received by the antenna 1, it is stored in the memory 11 inside the tuner 2. The tuner 2 selects a channel based on this service information. FIG. 2(B) shows the EPG information transmitted from a satellite. The EPG information is comprised of name of each program, start time, end time and the like. A format of this data is determined depending on transmission system.

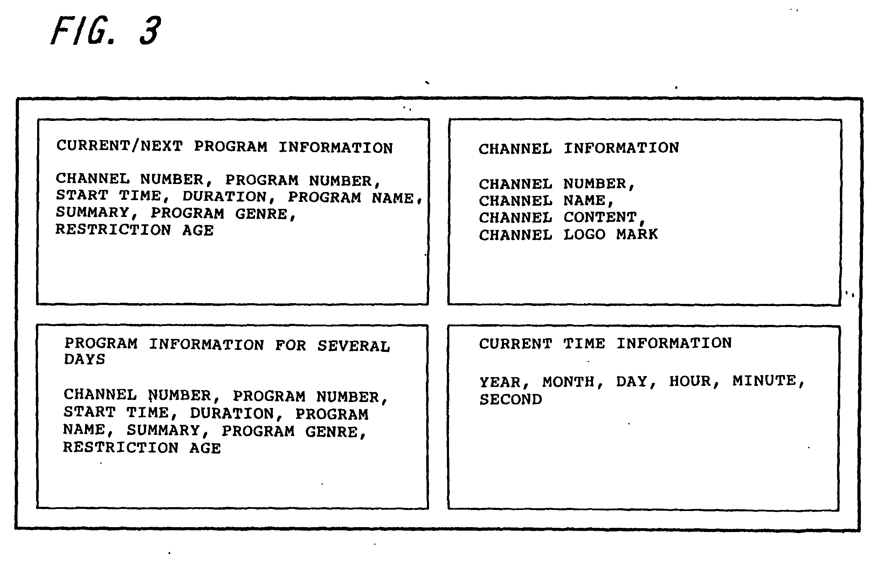

FIG. 3 shows an example of data indicated by the EPG information and EPG service information of a broadcasting system. The channel information (SDT) corresponds to the EPG service information, including channel number, channel name, description of channel content, channel logo mark and the like.

The EPG information corresponds to program information (present following EIT) indicating information of a program currently on air and information of a program next on air. A channel number of a current program (next program), its program number, start time, duration, program name, summary, program genre, legal restriction age and the like are indicated. In program information (schedule EIT) indicating program information for several days (for example, one week), channel number relating to programs for, several days, its program number, start time, duration, program name, summary, program genre, legal restriction age and the like are indicated.

In the current time information (TDT), current year, month, day, hour, minute, second are indicated.

Although not shown in FIG. 3, when a program table based on the EPG information is displayed, data about advertisement, message and the like to be displayed on screen at the same time may be transmitted.

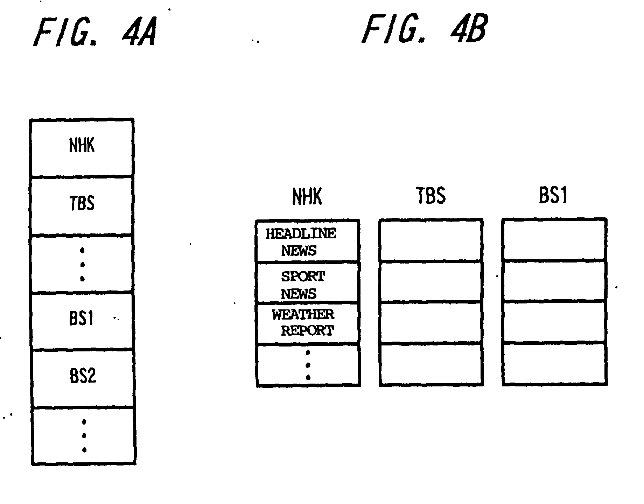

FIG. 4(A) shows an EPG service list (EPG-service list) to be stored in the memory 11. The EPG service list is comprised of a list of stations which can be selected. A head address of a memory actually storing service information necessary for selection of the station and a head address of the EPG event list (EPG-event list) which is a program list of each station described later are described in the list. An EPG service list exists for each electronic device. FIG. 4(B) shows the EPG event list to be stored in the memory 11. The EPG event list is list data in which the EPG information (see FIG. 2(B)) transmitted from a satellite is rearranged for each station according to a regulation of the EPG descriptor. A plurality of the EPG event lists may exist for a single electronic device.

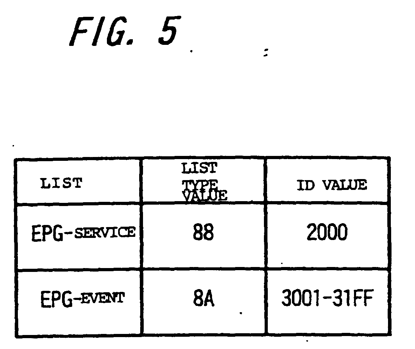

The aforementioned two object lists using the descriptor of the AV/C command will be described with reference to FIGS. 5-16.

FIG. 5 shows a format for identifying a list. In case of the EPG service list, the list type value is "88" and in case of the EPG event list, it is "8A". The EPG service list and EPG event list are specified in a tuner subunit.

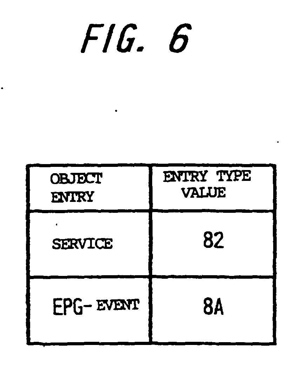

FIG. 6 shows a format of the object entry. In case where the object entry is service, the entry type value is "82". If the object entry is the EPG event, the entry type value is "8A".

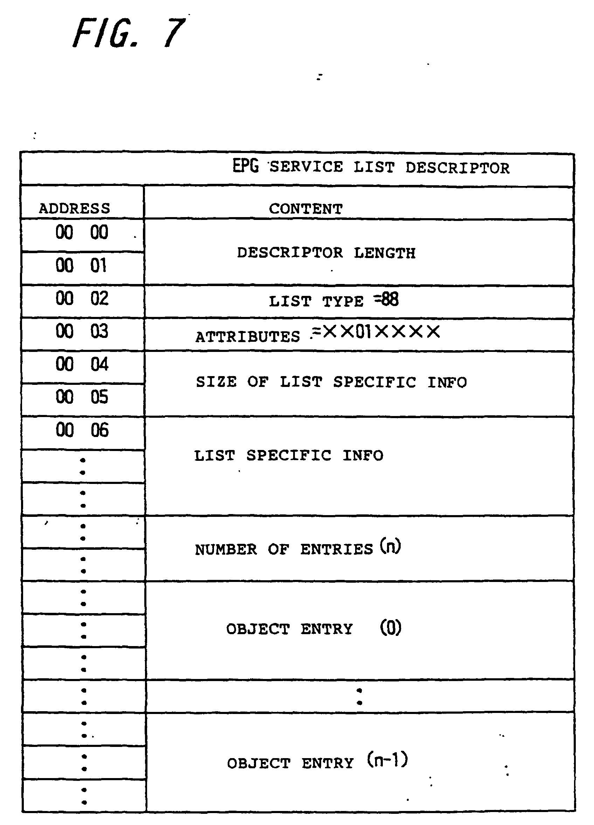

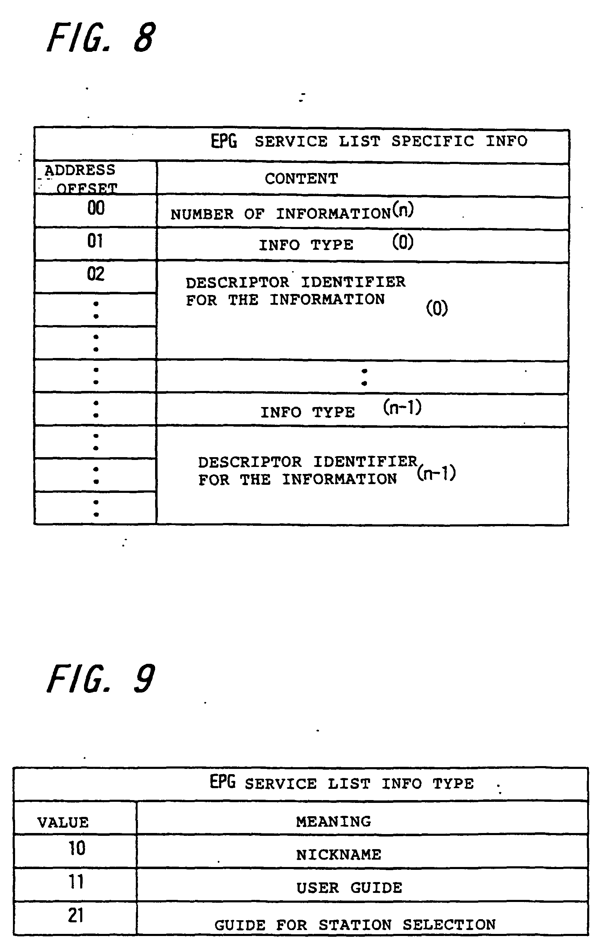

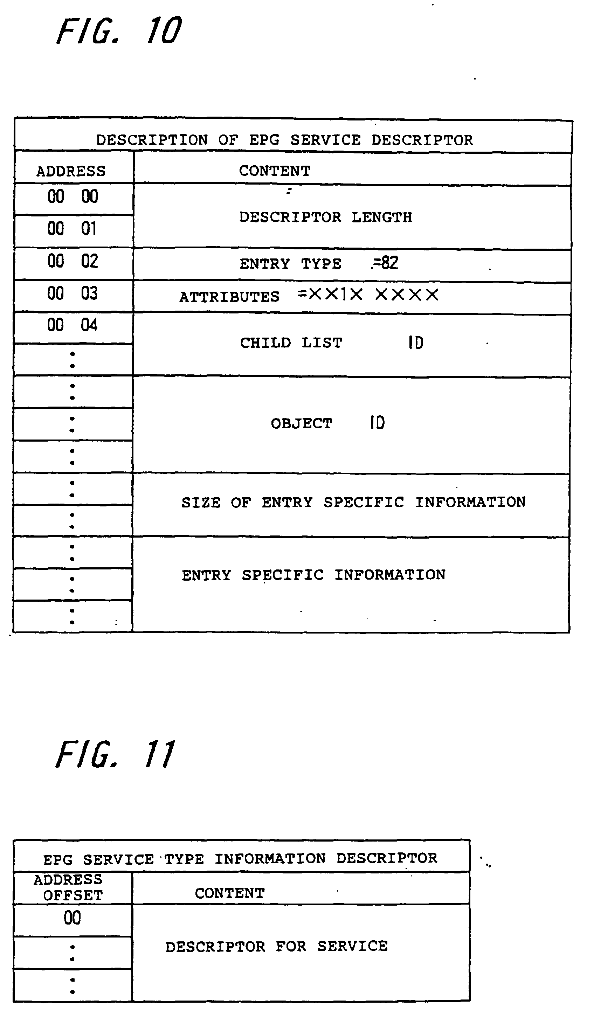

FIG. 7 shows a format of the EPG service list descriptor (EPG-service list descriptor). The descriptor length indicates an entire length of the EPG service list. According to FIG. 5, "88" indicating the EPG service list is set up as the list type. Attributes indicate an attribute of EPG service list structure with bit flag. "xx01 xxxx" indicates that there is no child list and there is an object. Size of list specific info indicates an entire length of following list specific info. List specific info indicates nick name of each station and user intonation which user can read and write later and is based on a format shown in FIG. 8, which will be described later. Number of entries indicates a number of stations picked up in the list. Object entry indicates a head address of service information which is selection information of each station and a plurality thereof can be picked up in order according to a format shown in FIG. 10.

FIG. 8 shows a format of the EPG-service list specific info shown in FIG. 7. Number of information indicates a total number of information picked up in the EPG-service list specific info field. Info type indicates a content of information and is based on FIG. 9 which will be described later. Descriptor identifier for the information indicates contents of EPG-service list specific info and contains test data which is a nick name of each station, graphic data such as icon and the like.

FIG. 9 indicates a format of info type shown in FIG. 8. For the nick name, "10" is set up and for user information, "11" is set up. Nick name indicates data of a nick name relating to a channel name inputted by user. User information indicates test data such as comment relating to an appropriate channel inputted by user. The nick name and comment are indicated at the same time, for example when a program list of an appropriate channel is displayed. For station selection frequency information (tuning information), "21" is set up. If this station selection frequency information is set up, an appropriate channel can be selected immediately using this information.

FIG. 10 indicates a format of an object entry shown in FIG. 7. Descriptor length indicates an entire length of the EPG service object entry descriptor. For entry type, "82" is set up according to FIG. 6. Attributes indicate an attribute of the structure of this list with bit flag. "xx1x xxxx" indicates that there is a child list. For the child list ID, ID of the EPG event list of each station is set up (see FIG. 5). Object ID is for setting up an ID for identifying each station. Size of entry specific information indicates an entire length of following entry specific information. Entry specific information follows a format of FIG. 11 which will be described later.

FIG. 11 shows a format of the entry specific information shown in FIG. 10. In contents, a head address of actual service information is described.

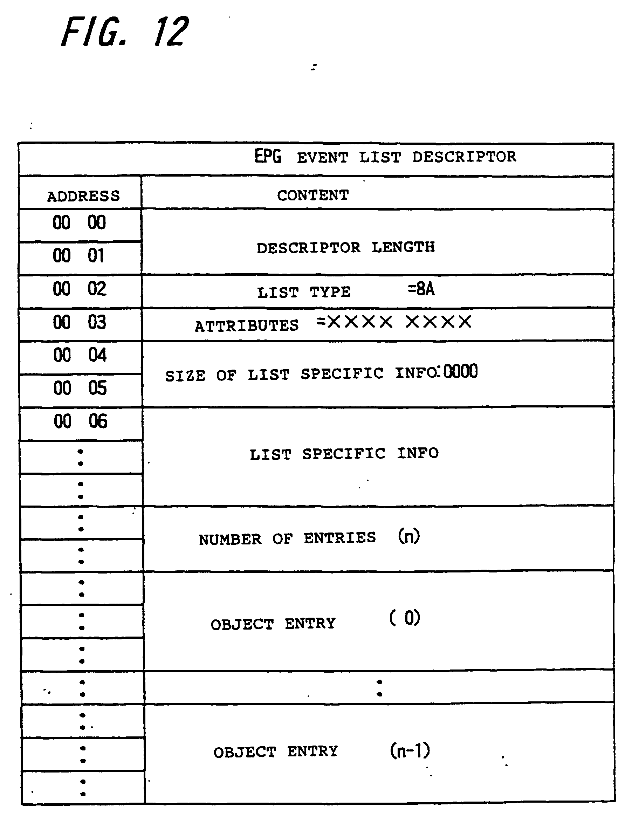

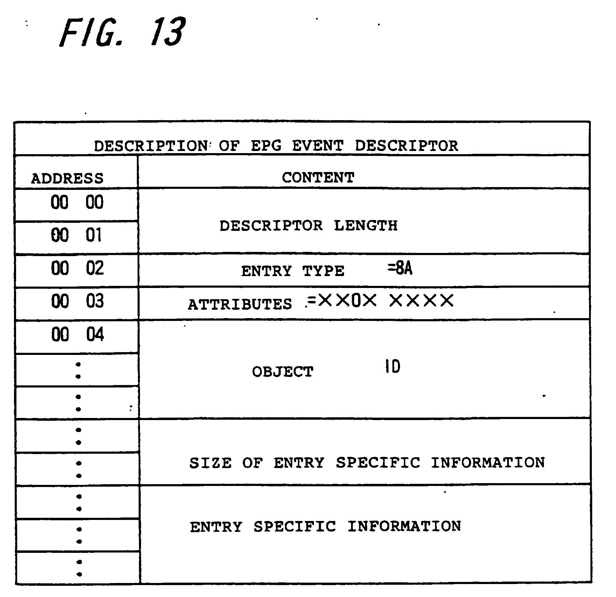

FIG. 12 shows a format of the EPG event list descriptor (EPG event list descriptor). Descriptor length indicates an entire length of the EPG event list. For list type, "8A" indicating the EPG event list is set up according to FIG. 5. Attributes indicate an attribute of the structure of this list with bit flag. "xxxx xxxx" here does not have special meaning. Because for size of list specific into, currently, only that item is provided but nothing has to be written, "0000" is set up. The item of list specific info is eliminated for the above reason. Number of entries indicates a total number of following EPG event objects. Object entry indicates actual program information and is based on a format shown in FIG. 13 which will be described later.

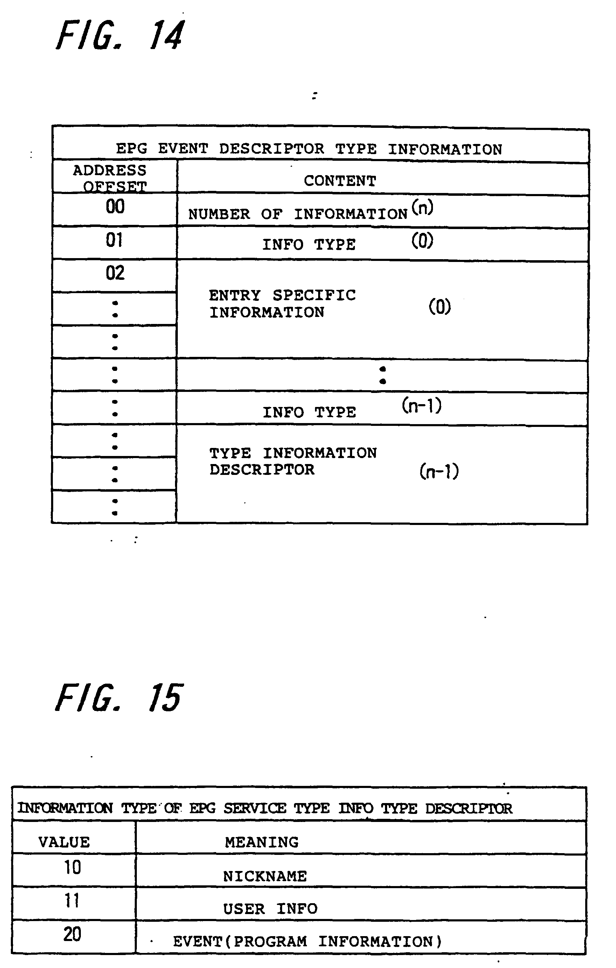

FIG. 13 shows a format of object entry shown in FIG. 12. Descriptor length indicates an entire length of the EPG event object entry descriptor. For entry type, "8A" is set up according to FIG. 6. Attributes indicate an attribute of the structure of this list with bit flag. "xx0x xxxx" indicates that there is no child list. Object ID indicates ID of each program. If the event ID is set up for each station, combination of the service ID and event ID is the object ID. Size of entry specific information indicates an entire length of following entry specific information. Entry specific information indicates a content of program information and is based on formats shown in FIGS. 14-16.

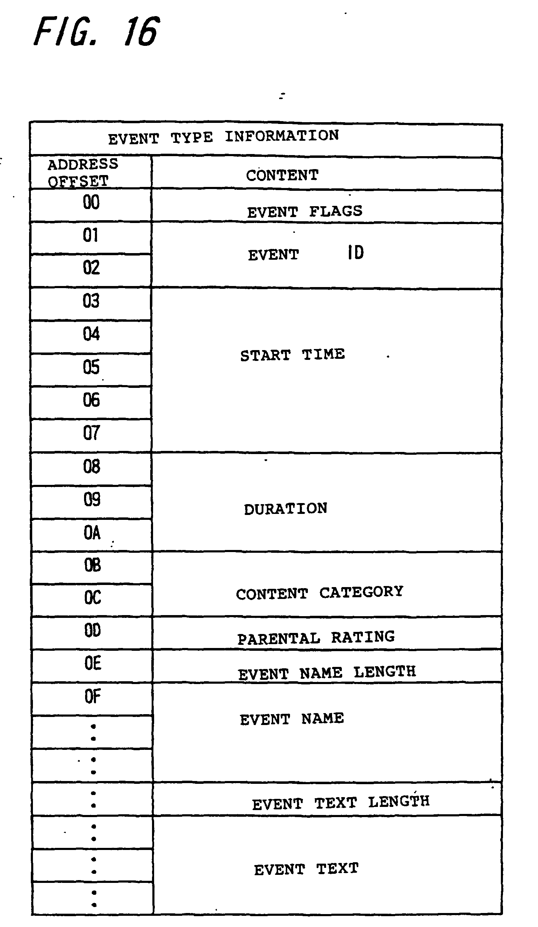

FIG. 14 shows a format of the entry specific information shown in FIG. 13. Number of information indicates a total number of information picked up as the entry specific information. Info type indicates a content of each information and is based on FIG. 15 which will be described later. If info type is a nick name or user information, entry specific information is based on FIG. 8 and if info type is event, FIG. 16 which will be described later.

FIG. 15 shows a format of info type shown in FIG. 14. For the nick name, "10" is set up, and for user information, "11" is set up. The nick name indicates data of nick name relating to a program inputted by user. User information indicates text data such as a comment relating to an appropriate program inputted by user. The nick name and comment are displayed at the same time when a detail of information relating to an appropriate program is displayed. For an event (program information), "20" is set up.

FIG. 16 shows a format to be developed when info type shown in FIG. 14 is event. As event flags, flags relating to copy right or the like is scheduled to be inputted. Event ID indicates an ID of system for specifying a program. Start time indicates a start time of a program. Duration indicates a length (time) of a program. Content category indicates a category of program content. Parental rating indicates an identification value (so-called age restriction data) for determining whether or not a program is acceptable for child. Event name length indicates an entire length of program name. Event name indicates a program name. Event text length indicates an entire length of text information. Event text indicates text information of a program.

Because the EPG event list which is program information is linked with service information which is station selection information, access to station selection information is facilitated so that station selection can be achieved quickly.

Further, because the EPG event list format is used, the EPG program information is arranged in a predetermined data structure thereby facilitating creation of application.

Further, because each item is handles as an object and a plurality of objects are overlaid to form a list structure, addition, change and deletion of the item can be carried out easily.

That is, the EPG service information received by the tuner 2 is stored in the memory 11 in the tuner 2 as an EPG service list using the descriptor of a protocol specified by the AV/C command and the received EPG program information is stored in the memory 11 as an EPG event list using the descriptor of a protocol of the AV/C command. As a result, other appliances than the tuner 2 connected to the bus 5 can use the EPG service information and EPG program information easily.

For example, a command for reading the EPG service list and EPG event list in the descriptor stored in the memory 11 of the tuner 2 is transmitted via bus 5 from the controller 3. The tuner 2 receiving this command transmits an appropriate list data to the controller 3 as a response specified by a protocol of the AV/C command, so that the controller 3 is enabled to use the EPG program information. For example, an appropriate program information can be displayed on the screen of the TV receiver 7 connected to the controller 3. Further, a processing for reservation of recording with the VCR 4 can be carried out based on program information. For example if a printer is connected to a computer unit constituting the controller 3, the EPG program information can be printed out as a list of programs which can be seen. That is, display and control based on the EPG program information can be achieved by using a general purpose computer unit corresponding to the AV/C command functioning as the controller 3 and its peripheral appliances.

In this case, because only information about channels which can be received is listed, only information about programs which can be received can be obtained, so that it is possible to access necessary information quickly.

As described above, the EPG service information and EPG program information can be provided with information of a comment on each channel or program and nick name. Thus, a display based on these is enabled. In this case, because information such as a comment and nick name is stored in the form of a descriptor, the comment or nick name can be memorized by operation from other appliances than the tuner by writing into an appropriate descriptor from other appliances connected to the tuner 2 via the bus 5.

When the EPG program information is transmitted to other appliances using the AV/C command, if there is any change in the EPG program information received by the tuner, that changed EPG program information can be automatically transmitted to other appliances. That is, the EPG program information is supplied with version information and if the EPG program information is changed, that version information is changed. On the other hand, for the AV/C command, a command [NOTIFY] for giving a response if there is a change in the content of the descriptor is prepared. If after the EPG program information stored in the memory 11 of the tuner 2 is read out by the controller 3 shown in FIG. 1, that command [NOTIFY] is transmitted to the tuner 2, when the version number of the received EPG program information is changed, the tuner 2 is capable of processing for transmitting the EPG program information (or information indicating only that the change occurs) of a changed content to the controller 3.

It is permissible to provide user with the EPG service list and EPG event list described above in same way by converting a program produced from the received EPG data to a program which can be read by the computer, to be recorded in a medium such as a magnetic disk, CD-ROM (optical disk), to execute the same processing with a computer unit capable of obtaining the EPG data. The medium mentioned here includes no only information record medium such as a magnetic disc and CD-Rom but also transmission medium by network such as internet and digital satellite.

In the above description, as a bus for connecting the tuner to other appliances, the IEEE1394 type standard bus is used. As a descriptor for converting the EPG service information and EPG program information, the descriptor of a protocol corresponding to the AV/C command is used. However, it is permissible to use a descriptor based on other standardized general purpose bus line (bus line connected in radio as well as a bus line connected via a wire signal line) and a descriptor based on general purpose protocol.

### DESCRIPTION OF THE REFERENCE

- 1: ANTENNA
- 2: TUNER
- 3: CONTROLLER
- 4: VCR
- 5: IEEE1394 BUS
- 6: TV RECEIVER
- 7: TV RECEIVER
- 11: MEMORY
- 12: CREATION PORTION
- 13: CHANGING PORTION

## Claims

1. An information processing system comprising:
extracting means for extracting program guide information included in broadcasting signal; and
converting means for converting said program guide information extracted by said extracting means to a data structure which can be shared by appliances which are connected via a predetermined network.

2. Art information processing system according to claim 1 wherein said data structure to be converted by said converting means is a general purpose format using a predetermined descriptor and said program guide information converted to data structure of the general purpose format is capable of being transmitted to said network based on a command specified by said general purpose format.

3. An information processing system according to claim 1 further comprising storage means for storing said program guide information converted by said converting means.

4. An information processing system according to claim 3 wherein said storage means includes a storage area capable of storing information inputted by user about each program or each channel indicated by said stored program guide information.

5. An information processing system comprising:
extracting means for extracting service information included in broadcasting signal; and
creation means for obtaining a list of service information relating to a channel which can be received from said service information extracted by said extracting means.

6. An information processing system according to claim 5 wherein said channel which can be received is a channel whose scrambling of broadcasting signal can be cancelled and a channel whose broadcasting signal is not scrambled.

7. An information processing system according to claim 5 wherein said extracting means extracts program guide information and a converting means for converting the extracted program guide information to a data structure of a predetermined format of each channel indicated by a list created by said creation means is further provided.

8. An information processing system according to claim 7 wherein a format of said data structure to be converted by said converting means is a general purpose format using a predetermined descriptor and said program guide information converted to data structure of the general purpose format is capable of being transmitted to a predetermined network based on a command specified by the general purpose format.

9. An information processing system according to claim 7 wherein said data converted by said converting means is capable of being added by information inputted by user for each program or each channel indicated by program guide information of said data.

10. An information processing method comprising:
extracting program guide information included in broadcasting signal; and
converting said extracted program guide information to a data structure capable of being shared among appliances connected via a predetermined network.

11. An information processing method according to claim 10 wherein said data structure to be convened is a general purpose format using a predetermined descriptor and said program guide information converted to data structure of the general purpose format is transmitted to said network based on a command specified by said general purpose format.

12. An information processing method according to claim 10 wherein said program guide information whose data structure is converted is added by information inputted by user for each program or each channel indicated by the program guide information.

13. An information processing method comprising:
extracting service information included in broadcasting signal; and
creating a list of information about a channel which can be received from the extracted service information.

14. An information processing method according to claim 13 wherein said channel which can be received is a channel whose scrambling of broadcasting signal can be cancelled and a channel whose broadcasting signal is not scrambled.

15. An information processing method according to claim 13 further comprising:
extracting program guide information; and
converting said extracted program guide information to a data structure of a predetermined format for each channel indicated by said list.

16. An information processing method according to claim 15 wherein said predetermined format is a general purpose format using a predetermined descriptor and said program guide information converted to a data structure of the general purpose format is transmitted to a predetermined network based on a command specified by said general purpose format.

17. An information processing method according to claim 15 wherein said data of said data structure of the predetermined format is added by information inputted by user for each program or each channel indicated by said program guide information of the data.

18. A provision medium for storing a program data for executing a processing including a step for converting program guide information included in broadcasting signal to a data structure capable of being shared among appliances connected via a predetermined network.
